# EUROPÄISCHE PATENTSCHRIFT

(11) **EP 0 600 109 B1**
(45) Veröffentlichungstag und Bekanntmachung des Hinweises auf die Patenterteilung: **15.01.1997**
(21) Anmeldenummer: 92120377.4
(22) Anmeldetag: 28.11.1992
(51) Int. Cl.: H01R 25/16

(54) **Kabelkanal, wie Installationskanal**
Cable duct, such as installation duct
Canalisation de câbles, comme canal d'installation

(43) Veröffentlichungstag der Anmeldung: 08.06.1994
(73) Patentinhaber: Hermann Kleinhuis GmbH. & Co. KG, D-58507 Lüdenscheid (DE)
(72) Erfinder: Balzer, Manfred, W-5880 Lüdenscheid (DE); Böing, Manfred, W-5880 Lüdenscheid (DE)
(74) Vertreter: Buse, Karl Georg, Dipl.-Phys.

(56) Entgegenhaltungen:
- DE-A- 4 103 957

## Beschreibung

Die Erfindung bezieht sich auf einen Kabelkanal, wie Installationskanal, bestehend aus einem leistenartigen, auf einer Wand anbringbaren, im Querschnitt gesehen etwa C-förmig gestalteten Unterteil, dessen Schenkel sich jeweils eine als Rast vorgesehene Deckelaufnahmenut anschließt, wobei die obere Begrenzungswand der Rast in eine schräggestellte Verlängerung in Form eines entlang des Unterteils sich erstreckenden Flansches übergeht und einem damit lösbar verbindbaren, deckelartigen, im Querschnitt gesehen etwa C-förmig gestalteten Oberteil, dessen Schenkel in eine Gegenrast auslaufen, sowie mit Einrichtungen zur Halterung bzw. Lagerung von elektrischen Installationsgeräten, wie Steckdosen, Schaltern, Dimmern od.dgl., wobei auf dem durchlaufenden Unterteil des Kabelkanals an einer frei wählbaren Stelle ein Adapter angebracht ist, der in die Deckelaufnahmenute des Unterteils einrastet, wobei der Adapter dafür an einer gekrümmten Wand eine Halterast aufweist, wobei der Adapter ein elektrisches Installationsgerät aufnimmt, welches mittels Schrauben mit dem Adapter verbunden ist.

Derartige Kabelkanäle, wie Installationskanäle, sind in verschiedenen Ausführungsformen bekannt. Ein bekannter Installationskanal setzt sich aus an der Wand befestigten, nach oben offenen Aufnahmeleisten zusammen, die nach dem Einlegen von beispielsweise Flachleitungen durch Abdeckleisten verschlossen werden können. An den gewünschten Aufnahmestellen der mit den Flachleitungen zu kontaktierenden elektrischen Installationsgeräte od.dgl. sind die Abdeckleisten ausgespart, wobei nach dem Einsetzen der Installationsgeräte die Aussparungen mit gesondert ausgeführten Abdeckstücken abgedeckt werden. Bei dieser Ausführungsform des Installationskanals erfolgt die Verbindung der Flachkabel miteinander und mit den Installationsgeräten durch eine Einstechkontaktierung. Dies erfordert sowohl besondere Installationsgeräte und Abzweigklemmen und bedingt andererseits eine Anpassung der Aussparungen bzgl. ihrer Lage und Form in den Abdeckleisten an die verwendeten Installationsgeräte. Die Herrichtung von Aussparungen in den Abdeckleisten ist aufwendig und zeitraubend. Ferner sind an die Genauigkeit der stumpf an die Installationsgeräte anschließenden Aussparungen hohe Anforderungen zu stellen, wenn man auf eine saubere und gut aussehende Verlegung des Installationskanales Wert legt.

Ferner sind Installationskanäle bekannt, die im wesentlichen ein im Querschnitt U-förmiges Unterteil und eine mit diesem verrastbare Deckelleiste aufweisen. Im Kanalunterteil ist an der ausgewählten Stelle eine das gewünschte Installationsgerät aufnehmende Geräteeinbaudose befestigt, die mit ihrer Öffnung bis in Höhe der Deckelleiste vorragt und einen Ausschnitt in dieser Deckelleiste durchdringt. In einer solchen Geräteeinbaudose läßt sich ein Installationsgerät auf die gleiche Weise wie in einer Unterputzdose festlegen. Dies bedeutet, daß sich der Ausschnitt in der Deckelleiste durch die zugehörigen Verkleidungsplatten abdecken läßt. Dabei sind jedoch die Deckelleisten an der die Einbaugeräte aufweisenden Stelle des Installationskanals mit einem Ausschnitt zu versehen, oder aber die Deckelleiste ist zu unterbrechen, um im Bereich der Anbaugeräte den Unterteil des Installationskanales durch gelochte Deckelabschnitte abzudecken. In jedem Falle ist eine Anpassung der Deckelleiste entweder durch die Herstellung eines entsprechenden Ausschnittes oder aber durch die maßgerechte Abtrennung nachträglich an die vorgesehenen Einbauverhältnisse anzupassen.

Um hier Abhilfe zu schaffen, ist ein anderer Installationskanal durch die DE 28 16 955.3 A1 bekanntgeworden. Bei dieser Ausführungsform ist vorgesehen, daß der Installationskanal mit seinen Aufnahmeleisten und Abdeckleisten an den Aufnahmestellen für die Installationsgeräte vollständig und abstandsweise unterbrochen ist. Ferner sind mit am Untergrund befestigten, die Installationsgeräte bedarfsweise haltenden, an die Trennfläche des Installationskanals stoßenden, die Längsseiten der Aufnahmeleisten überbrückenden Bodenplatten und mit diesen verbindbaren, die Installationsgeräte abdeckende Gehäusekappen gekuppelt. Bei dieser Ausführungsform läßt sich ein Installationskanal erstellen, in dem zunächst an den dafür vorgesehenen Stellen am Untergrund, wie einer Wand od.dgl., die einem Installationsgerät oder einer Abzweigdose zugeordneten Bodenplatten entsprechend der Kanallängsrichtung im gewünschten Abstand zueinander befestigt werden, um anschließend diese Bodenplatten mit den auf einfache Weise auf Länge geschnittenen Aufnahmeleisten zu verbinden. Diese können ebenfalls, insbesondere bei großem Abstand, zwischen den einzelnen Bodenplatten mit dem Untergrund selbst verbunden werden. Zusammen mit den Aufnahmeleisten können gleichfalls die mit diesem zusammen den Installationskanal bildenden Abdeckleisten auf gleiche Länge abgeschnitten werden.

Kabelkanäle, wie Installationskanäle, der eingangs näher gekennzeichneten Art sind durch die DE 41 03 957 A1 bekanntgeworden. Derartige Kabelkanäle haben an sich den Vorteil, daß eine Unterbrechung des Unterteils nicht mehr erforderlich ist. Vielmehr kann der Unterteil des Kabelkanals durchlaufen. Der Benutzer dieses bekannten Kabelkanals hat ferner die Möglichkeit, den Adapter an einer für ihn frei wählbaren Stelle mit dem Unterteil zu verbinden. Dabei ist eine Verrastung mit der Deckelaufnahmenut möglich. Dies bedeutet, daß durch Aufstecken des Adapters eine Verbindung desselben mit dem Kabelkanalunterteil erfolgen kann. Im Bereich des Adapters wird das Installationsgerät angeordnet. Dabei kann man, was wiederum vorteilhaft ist, auf handelsübliche Ausführungsformen zurückgreifen.

Auf der anderen Seite hat ein Kabelkanal nach DE 41 03 957 A1 auch Nachteile. Diese bestehen vor allem darin, daß der Adapter der bekannten Ausführungsform des Kabelkanals einen plattenförmigen Mittelbereich aufweist. In diesem Mittelbereich sind ausbrechbare Wandungsteile vorgesehen. Diese Wandungsteile ergeben nach ihrem Ausbrechen nur einen kleinen Durchbruch zum Durchführen von Leitungen. Darüber hinaus sind die vorhandenen Durchbrüche nicht mittig, sondern seitlich angeordnet. Bei der bekannten Ausführungsform des Adapters besteht die Gefahr der Verformung nach dem Aufsetzen auf den Kabelkanalunterteil. Eine Verformung bei auftretenden größeren Kräften ist zu befürchten, weil keine Vorkehrungen getroffen sind, um diese Kräfte aufzufangen.

Hier setzt die Erfindung ein. Sie will Kabelkanäle nach DE 41 03 957 A1 unter Beibehaltung der genannten Vorteile weiterverbessern. Insbesondere soll das Durchführen von Leitern, Kabeln od.dgl. durch den Adapter gegenüber dem Bekannten verbessert werden. Darüber hinaus sollen Vorkehrungen getroffen werden, um auftretende Kräfte auf den Adapter aufzufangen.

Zur Lösung dieser Aufgabe wird erfindungsgemäß vorgeschlagen, daß der Adapter rahmenartig gestaltet ist, und daß die Stege dieses Rahmens einen mittleren Durchbruch zum Durchführen von Leitungen, Kabeln od.dgl. umschließen, und daß ein Unterbringungsraum für die Verlängerung zusätzlich durch einen Vorsprung und durch eine Wand begrenzt ist. Bei dieser erfindungsgemäßen Ausbildung eines Kabelkanals ergibt sich zunächst der bekannte Vorteil, daß der Benutzer die Möglichkeit hat, den Adapter an einer für ihn frei wählbaren Stelle mit dem Unterteil zu verbinden, was wiederum durch eine Verrastung in der Deckelaufnahmenut geschieht. Durch die erfindungsgemäße, rahmenartige Gestaltung des Adapters ergibt sich einmal die Möglichkeit, daß die Stege des Rahmens elastisch ausgebildet werden können, so daß eine begrenzte Beweglichkeit der Rahmenteile des Adapters vorgesehen ist. Da der Adapter einen großen mittleren Durchbruch aufweist, ist ein leichtes Durchführen von Leitungen, Kabeln od.dgl. möglich. Da der Unterbringungsraum für die Verlängerung durch einen Vorsprung begrenzt ist, können auftretende Kräfte auf den Adapter leicht aufgefangen werden. Eine Lageveränderung von denjenigen Teilen des Adapters, die in den Unterbringungsraum eingreifen, ist nicht mehr möglich, denn diese Teile können wegen des vorgesehenen Vorsprunges nicht mehr in Richtung auf das Innere ausweichen.

Bei den im Bereich des Adapters unterzubringenden Installationsgeräten kann auf handelsübliche Ausführungsformen zurückgegriffen werden, so wie dies schon bei der bekannten Ausführungsform nach DE 41 03 957 A1 der Fall ist. Es können daher wahlweise unterschiedlich gestaltete elektrische Installationsgeräte eingesetzt werden.

Bei der bevorzugten Ausführungsform der Erfindung sind die in Längsrichtung des Kabelkanals verlaufenden Stege des Rahmens an ihren freien Enden mit Halterasten versehen; darüber hinaus sind sie zur Verbesserung ihrer Elastizität durch Schlitze in Teilbereiche unterteilt.

Es empfiehlt sich, die quer zur Längsrichtung des Kabelkanals verlaufenden Stege des Rahmens schmaler zu bemessen als die übrigen Stege. Darüber hinaus empfiehlt es sich, Ausnehmungen an ihren Seitenkanten vorzusehen. Auf diese Weise hat der rahmenartige Adapter eine genügend große Elastizität, um in einfacher Weise auf den Unterteil aufgesteckt werden zu können.

Es empfiehlt sich, daß der Adapter auf seiner dem Unterteil des Kabelkanals abgewandten Seite mehrere Säulen aufweist, die der Festlegung des elektrischen Installationsgerätes dienen, welches in dem von den Säulen begrenzten Raum angeordnet ist. Dabei ist es vorteilhaft, wenn der Adapter insgesamt vier Säulen aufweist, die in Nähe des Übergangsbereiches der Stege des Rahmens angeordnet und als Hohlsäulen ausgebildet sind.

Bei der bevorzugten Ausführungsform der Erfindung weist der Innenraum jeder Säule mehrere, wahlweise benutzbare Hohlräume auf, die an der Innenwand ein Innengewinde zum Zusammenwirken mit dem Außengewinde der Befestigungsschraube aufweist, deren Schaft in eine der oberen Öffnungen der Hohlräume einführbar ist.

Durch das Vorhandensein von mehreren, wahlweise benutzbaren Hohlräumen für die Befestigungsschrauben ist eine Anpassung an unterschiedliche Ausführungsformen von Installationsgeräten möglich. Die beiden Hohlräume ein und derselben Säule haben daher unterschiedlichen Abstand von dem Mittelpunkt des von den vier Säulen umgebenen Raumes.

Nach einem weiteren Vorschlag der Erfindung weist der Adapter an den diametral gegenüberliegenden Stegen des Rahmens Halter auf, deren Haltehaken zur lösbaren Anbringung eines den Adapter und das Installationsgerät abdeckenden Gehäuses dienen.

Es empfiehlt sich aus wirtschaftlichen Gründen, dieses Gehäuse als einstückigen, haubenartigen Körper auszubilden, der an zwei diametral gegenüberliegenden Wandungen einen Eingriffsschlitz für den Haltehaken des Halters des Adapters hat, und dessen Decke eine Öffnung für einen Teil des Installationsgerätes, wie einen Einsatz, aufweist. Sowohl der Adapter selbst als auch das diesem zugeordnete Gehäuse können jeweils einstückig aus einem der in der Elektroindustrie gebräuchlichen Isolierstoffe hergestellt werden.

Bei den Unterteilen des Kabelkanals der hier infragekommenden Art sind im Bereich des Bodens liegend Trennwände vorgesehen. Es wird nun vorgeschlagen, die Spitze wenigstens einer dieser Trennwände des Unterteils als Abstützung für die Stege des rahmenartigen Adapters zu benutzen. Die Spitze einer Trennwand bildet somit ein Widerlager für Bereiche des Adapters. Bei dem erfindungsgemäßen Adapter kann es sich um einen solchen handeln, der für Einzelinstallationsgeräte benutzbar ist. Darüber hinaus kann der Adapter aber auch so ausgebildet sein, daß er ein an sich bekanntes Mehrfachinstallationsgerät, wie eine Zweifachsteckdose, aufnehmen kann.

In den Figuren der Zeichnungen ist die Erfindung in mehreren Ausführungsbeispielen dargestellt, und zwar zeigen:
- Fig. 1: in explosionsartiger Darstellung einen Kabelkanal, wie einen Installationskanal, mit dem zugeordneten Adapter und dem mit diesem zusammenwirkenden Gehäuse, wobei die beiden Teile, nämlich der Adapter und das Gehäuse vor ihrer Anbringung an dem Kabelkanal wiedergegeben sind;
- Fig. 2: in vergrößertem Maßstab und im Längsschnitt den erfindungsgemäßen elektrischen Kabelkanal nach der Fig. 1, und zwar nach dem Anbringen des Adapters des Installationsgerätes und des zugeordneten Gehäuses;
- Fig. 3: teilweise im Schnitt und teilweise in Ansicht und in vergrößertem Maßstab den Adapter des Kabelkanals nach den Fig. 1 und 2;
- Fig. 4: eine Unteransicht des Adapters nach der Fig. 3;
- Fig. 5: eine Draufsicht auf den Adapter nach der Fig. 3;
- Fig. 6: den Adapter nach den Fig. 3 bis 5, teils in Ansicht, teils im Schnitt;
- Fig. 7: in explosionsartiger Darstellung eine zweite Ausführungsform eines erfindungsgemäßen Kabelkanals mit dem zugeordneten Adapter und mit dem mit diesem zusammenwirkenden Gehäuse, wobei in diesem Falle das elektrische Installationsgerät ein Mehrfachgerät an sich bekannter Bauart ist;
- Fig. 8: in schematischer Ansicht das elektrische Mehrfachinstallationsgerät nach dem Anbringen auf dem erfindungsgemäßen Kabelkanal.

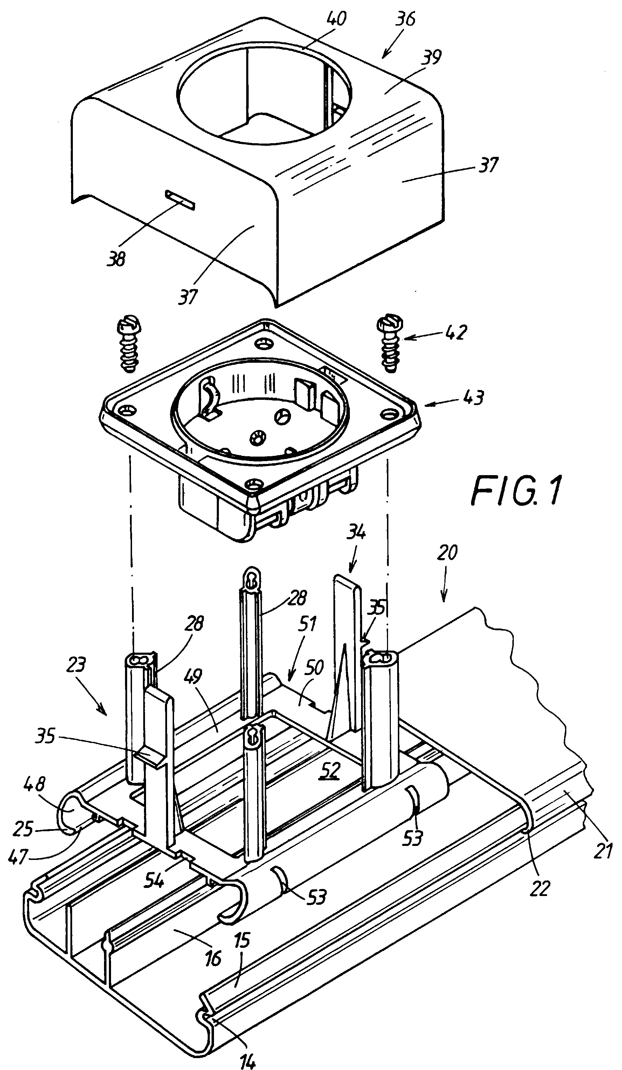

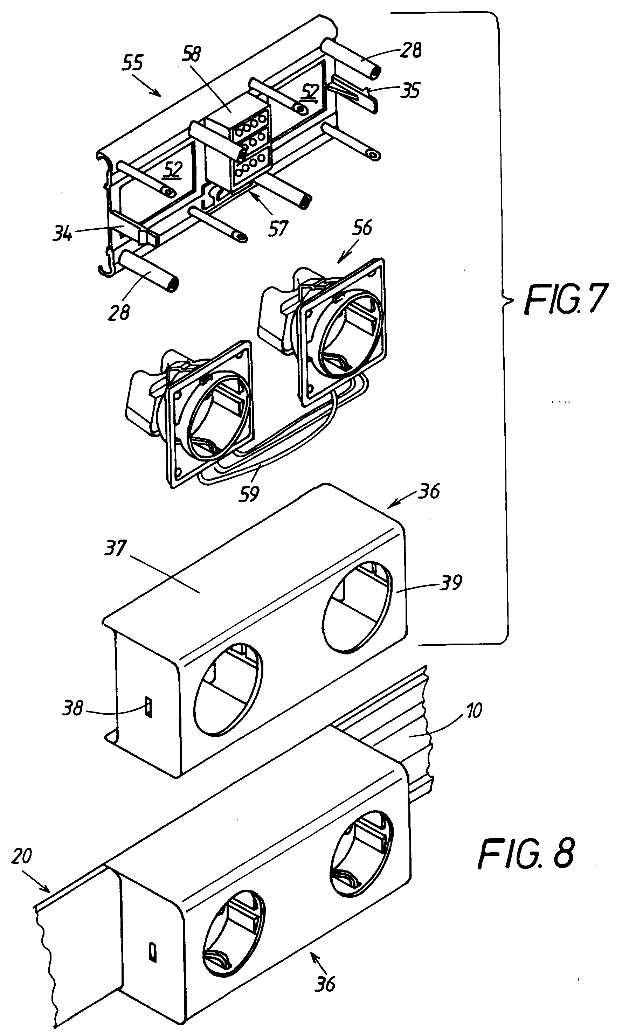

Es sei zunächst erwähnt, daß in den Figuren der Zeichnungen nur diejenigen Teile eines elektrischen Kabelkanals wiedergegeben sind, die für das Verständnis der Erfindung Bedeutung haben. So sind insbesondere die in den Kammern des Unterteils des Kabelkanals unterzubringenden Kabel, Leitungen od.dgl. fortgelassen. Mit dem Adapter kann ein grundsätzlich bekanntes elektrisches Installationsgerät zusammenwirken. Die in den Fig. 1 und 7 der Zeichnungen dargestellten elektrischen Installationsgeräte, jeweils in Form einer Schukosteckdose, stehen also nur stellvertretend für den Einsatz anderer elektrischer Installationsgeräte. Im übrigen können alle in den Zeichnungen fehlenden Teile eine bekannte Ausbildung haben und in ebenfalls bekannter Weise mit dem Kabelkanal oder dessen Teilen verbunden werden.

Dem Ausführungsbeispiel nach den Fig. 1 bis 6 der Zeichnungen ist ein generell mit 10 bezeichneter Kabelkanal zugrundegelegt, der auch als Installationskanal bezeichnet wird. Zu diesem Kabelkanal 10 gehört ein leistenförmiger Unterteil 11, der im Querschnitt gesehen etwa C-förmig gestaltet ist. Die aufrechtstehenden Schenkel dieses C-förmigen Unterteiles 11 sind mit 12 bezeichnet. Sie sind miteinander durch einen eben gehaltenen Boden 13 miteinander verbunden. Dieser Boden 13 kann als Befestigungsfläche für den Unterteil 11 an einer Wand eines Raumes benutzt werden. Dabei lassen sich bekannte Befestigungsmittel einsetzen, so daß auf ihre zeichnerische Darstellung verzichtet worden ist.

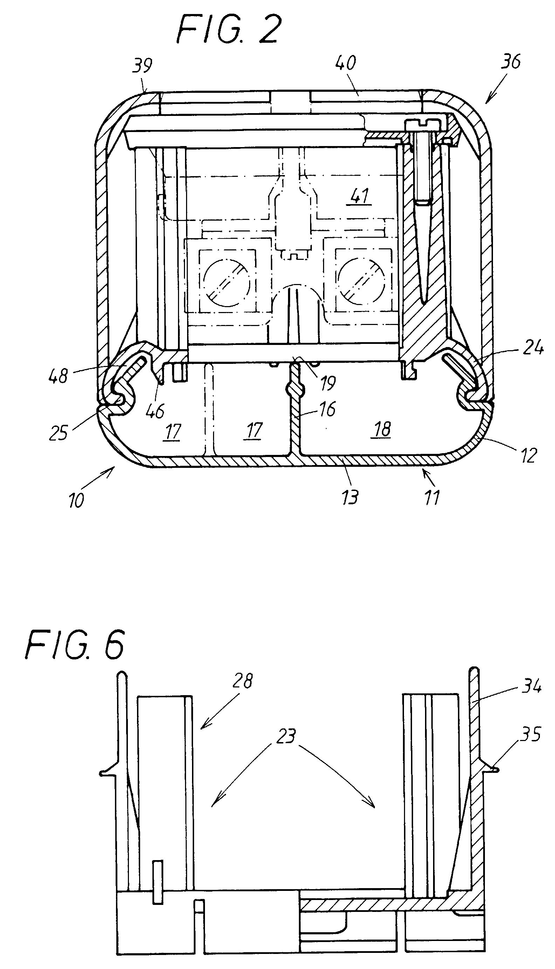

An die Seitenwand 12 schließt sich jeweils eine durchlaufende Rast 14 an, die im Querschnitt gesehen etwa U-förmig gestaltet ist. Die obere Begrenzungswand der Rast 14 geht über in eine schräggestellte Verlängerung 15. Wie die Fig. 2 der Zeichnungen erkennen läßt, zeigen die beiden Verlängerungen 15 der beiden Seitenwände 12 aufeinander; sie begrenzen die obere Öffnung des C-förmigen Unterteils.

Im Bereich des Bodens 13, und zwar an der Innenwand liegend, sind diesem Trennwände 16 angeformt. Im Ausführungsbeispiel nach den Fig. 1 bis 6 der Zeichnungen sind zwei solcher Trennwände 16 vorhanden. Eine dieser beiden Trennwände 16 ist in der Mitte des Unterteils 11 angeordnet und verläuft in Längsrichtung des Kabelkanals. Durch die Trennwände 16 werden im Unterteil Kammern 17 und 18 gebildet. Von diesen Kammern sind die mit 17 bezeichneten die volumenmäßig kleineren. Die Kammer 18 nimmt dagegen die gesamte rechte Hälfte des Unterteils 11 des Kabelkanals 10 ein. Die Trennwand 16 läuft jeweils in eine Spitze 19 aus, die etwa in Höhe der oberen Öffnung des C-förmigen Unterteiles 11 liegt. Diese obere Öffnung des Unterteils kann durch einen deckelartigen Oberteil 20 in bekannter Weise verschlossen werden. Dieser deckelartige Oberteil 20 ist im Querschnitt gesehen ebenfalls C-förmig gestaltet. Seine parallel und im Abstand zueinander angeordneten Schenkel 21 laufen in eine Gegenrast 22 aus, die in der in Fig. 1 dargestellten Weise mit der Rast 14 des Unterteiles 11 zusammenwirken. Das Verbinden des deckelartigen Oberteils 20 mit dem Unterteil 11 des Kabelkanals 10 erfolgt durch einfaches Aufstecken. Im übrigen sind sowohl der Unterteil 11 als auch der deckelartige Oberteil 12 des Kabelkanals 10 aus einem der in der Elektroindustrie gebräuchlichen Isolierstoffe, insbesondere aus einem Kunststoff, einstückig hergestellt.

Erfindungsgemäß ist dem durchlaufenden Unterteil 11 des Kabelkanals 10 ein generell mit 23 bezeichneter Adapter bzw. Verbinder zugeordnet, der an einer vom Benutzer frei wählbaren Stelle mit dem Unterteil 11 des Kabelkanals 10 lösbar verbunden werden kann. Bei dem Adapter handelt es sich um einen einstückigen, aus einem isolierenden Werkstoff gefertigten Körper, der rahmenartig gestaltet ist, wobei seine Stege eine gewisse Elastizität aufweisen, um ein Aufstecken des Adapters 23 auf den Unterteil 11 des Kabelkanals 10 durchführen zu können.

Der Adapter 23 ist als Rahmen 51 ausgebildet. In Draufsicht gesehen ist dieser Rahmen 51 etwa rechteckig gestaltet. Die Stege dieses Rahmens 51 sind mit 49 bzw. 50 bezeichnet. Die beiden breitergehaltenen Stege 49 verlaufen dabei in Längsrichtung des Kabelkanals 10. Sie gehen in einen gekrümmten Endbereich aus, an dessen freiem Ende sich eine Halterast 25 befindet, die in der in Fig. 2 dargestellten Weise in einen Bereich der Rast 14 des Unterteils 11 des Kabelkanals 10 eingreifen kann. In der in Fig. 2 dargestellten wirksamen Lage des Adapters 23 liegt die Spitze 19 der Trennwand 16 an den Unterseiten der quer verlaufenden Stege 50 des Rahmens 51 an. Daher bilden die Spitzen Abstützpunkte zum Auffangen von Kräften, die auf den Adapter 23 einwirken. Der Adapter 23 hat, wie die Fig. 1 und 2 erkennen lassen, nicht nur die schon erwähnte Halterast 25, sondern auch einen Vorsprung 46. Halterast 25 und Vorsprung 46 begrenzen eine Einführungsöffnung 47 eines Unterbringungsraumes 48. In diesem Unterbringungsraum 48 liegt - vergleiche dazu die Fig. 2 der Zeichnungen - die Verlängerung 15 des Kabelkanalunterteils 11.

Nachzutragen bleibt noch, daß die in Längsrichtung des Kabelkanals 10 verlaufenden Stege 49 des Rahmens 51 mehrere, im dargestellten Ausführungsbeispiel jeweils zwei Schlitze 53 aufweisen, die den Steg 49 in Teilbereiche aufgliedern und für eine gute Elastizität des Steges Sorge tragen.

Die quer zur Längsrichtung des Kabelkanals 10 verlaufenden Stege 50 des Rahmens 51 sind wesentlich schmaler bemessen, als die mit 49 bezeichneten. Die Stege 50 haben an ihrer Außenseite liegend jeweils Ausnehmungen 54. Diese Ausnehmungen sind im gewählten Ausführungsbeispiel in Draufsicht gesehen rechteckig gestaltet, wobei sie zur Außenseite hin offen sind.

Die Stege 49 bzw. 50 des Rahmens 51 schließen einen mittleren Druchbruch 52 zum Durchführen von Leitungen, Kabeln od.dgl. ein. Dies bedeutet, daß praktisch der gesamte Mittelteil des Adapters 23 als Durchbruch gestaltet ist.

Auf diese Weise ist ein unbehindertes Durchführungen von Leitungen, Kabeln od.dgl. möglich.

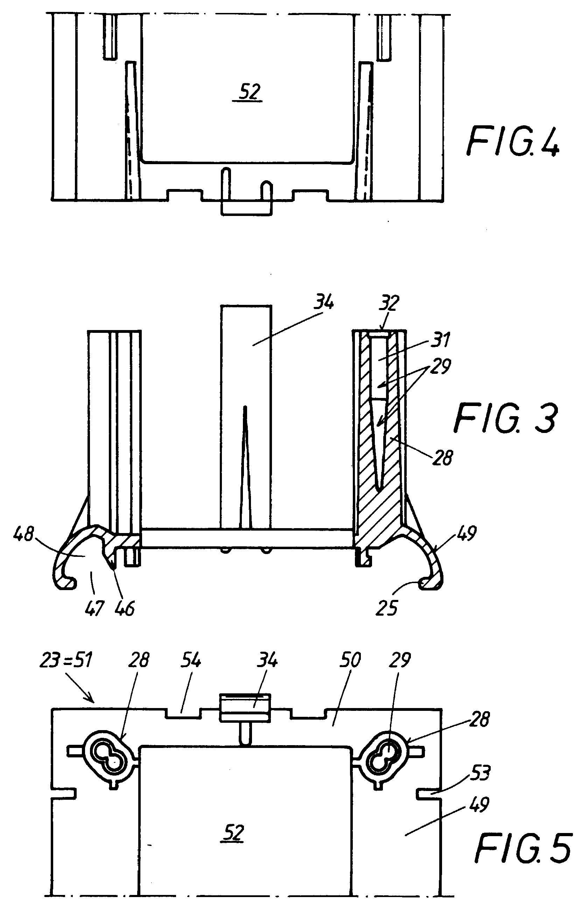

Wie am besten aus der Fig. 1 der Zeichnungen ersichtlich ist, hat der Adapter 23 auf seiner dem Unterteil 11 des Kabelkanals 10 abgewandten Seite insgesamt vier Säulen 28, die dem Adapter unmittelbar angeformt sind. Im dargestellten Ausführungsbeispiel liegen die Säulen 28 jeweils in Nähe des Übergangsbereiches zwischen den Stegen 49 bzw. 50. Die Säulen 28 sind untereinander gleichgestaltet und haben jeweils einen Hohlraum 29. Der obere Teil des Hohlraumes 29 ist zugleich ein Eingriffsraum 31 für eine Befestigungsschraube 42. Daher ist die Innenwand des Eingriffsraumes 31 mit einem nicht näher bezeichneten Innengewinde versehen. Daneben ist es aber auch möglich, daß sich die Befestigungsschraube 42 ihr Gewinde selbst an der Innenwand des Eingriffsraumes 30 erzeugt. Im übrigen ist der Hohlraum 29 bzw. der Eingriffsraum 31 nach oben hin offen. Diese obere Öffnung ist mit 32 bezeichnet - vergleiche dazu die Fig. 3 der Zeichnungen -. Im dargestellten Ausführungsbeispiel - vergleiche dazu die Fig. 5 der Zeichnungen - hat jede Säule mehrere, wahlweise benutzbare Hohlräume 29 für Befestigungsschrauben 42. Von diesen beiden Hohlräumen 29 wird jeweils nur der eine benutzt. Auf diese Weise wird dem Benutzer die Möglichkeit gegeben, eine Anpassung an unterschiedliche Befestigungselemente für Installationsgeräte zu schaffen, denn der Abstand der beiden Hohlräume 29 ein und derselben Säule 28 vom Mittelpunkt des Durchbruches 52 ist unterschiedlich groß.

Im übrigen kann der Schaft der Befestigungsschraube 42 in die obere Öffnung 32 des Eingriffsraumes 31 eingeführt werden, derart, daß ein Außengewinde mit dem Innengewinde des Eingriffsraumes 31 der Säule 28 in Wirkverbindung treten kann. Die wirksame Lage einer Befestigungsschraube 42 ist in der Fig. 2 der Zeichnungen dargestellt. Dort ist auch erkennbar, daß der Hohlraum 29 nach unten hin geschlossen, also sacklochartig ausgebildet ist.

Der von den vier Säulen 28 umgebene Raum, welcher nicht näher bezeichnet ist, dient zur Unterbringung eines an sich bekannten elektrischen Installationsgerätes. Hierbei kann es sich, wie im dargestellten Ausführungsbeispiel, um eine Steckdose handeln. Daneben ist aber auch der Einsatz eines Schalters, eines Dimmers od.dgl. möglich. In der Fig. 2 der Zeichnung ist in strichpunktierten Linien die Lage eines solchen Installationsgerätes 41 wiedergegeben. Im gewählten Ausführungsbeispiel handelt es sich dabei um eine grundsätzlich bekannte Schutzkontaktsteckdose. Da diese einen bekannten Aufbau hat, ist es nicht erforderlich, nähere Einzelheiten ihrer Merkmale anzugeben. Es sei lediglich erwähnt, daß die Anschluß- oder Verbindungsleitungen des elektrischen Installationsgerätes 41 durch den mittleren Durchbruch 52 hindurchgeführt werden können, um in die Kammern 17 bzw. 18 des Unterteils 11 des Kabelkanals 10 gelangen zu können. Das Verlegen der Anschlüsse und Kabel und ihr Anschluß an Kontakte ist bekannt, so daß auf die Darstellung verzichtet ist.

Wie am besten aus der Fig. 1 der Zeichnungen ersichtlich ist, hat der Adapter 23 in der Mitte der Stege 50 des Rahmens 51 liegend je einen Halter 54, der senkrecht zur Grundebene des Rahmens 51 angeordnet ist, und der in seiner Mitte jeweils einen Haltehaken 35 aufweist; dieser zeigt nach außen, also vom Steg 50 weg.

Damit nach dem Anbringen des Adapters 23 und des diesem zugeordneten elektrischen Installationsgerätes 41 nach dem Anbringen an dem Unterteil 11 des Kabelkanals 10 diese Teile abgedeckt werden können, ist ein generell mit 36 bezeichnetes Gehäuse vorgesehen, welches aus einem in der Elektroindustrie gebräuchlichen Isolierstoffe gefertigt ist. Bei dem Ausführungsbeispiel nach der Fig. 1 der Zeichnungen ist dieses Gehäuse 36 haubenförmig gestaltet. Es hat vier paarweise angeordnete Seitenwandungen 37. In zwei diametral gegenüberliegenden Seitenwandungen 37 sind Eingriffsschlitze 38 vorgesehen, die mit den Haltehaken 35 des Halters 34 des Adapters 23 zusammenwirken.

In der eben gehaltenen Decke 39 des Gehäuses 36 ist in der Mitte liegend eine nicht näher bezeichnete Öffnung vorgesehen. In dieser Öffnung ist im gewählten Ausführungsbeispiel ein Einsatz 40 angeordnet. Dieser Einsatz 40 kann auch Bestandteil eines elektrischen Installationsgerätes 41 sein. Beispielsweise kann es sich um den Einsatz einer Schutzkontaktsteckdose handeln.

Aus den Fig. 1 und 2 der Zeichnungen ist ersichtlich, daß der Adapter 23 mittels der Befestigungsschrauben 42 des Installationsgerätes 41 auf dem Unterteil 11 verspannt ist. Daher kann auf besondere, also zusätzliche Befestigungsschrauben verzichtet werden. Stattdessen werden die für das elektrische Installationsgerät 41 sowieso erforderlichen Befestigungsschrauben 42 auch zum Verspannen des Adapters mit dem Unterteil 11 des Kabelkanals 10 herangezogen.

In den Fig. 1 bis 6 der Zeichnungen ist dem Adapter 23 jeweils nur ein Einzelinstallationsgerät 41 zugeordnet. Demgegenüber wird in den Fig. 7 und 8 der Zeichnungen veranschaulicht, daß die Erfindung auch bei einem an sich bekannten elektrischen Mehrfachinstallationsgerät eingesetzt werden kann. Gemäß den Fig. 7 und 8 der Zeichnungen ist der Adapter nunmehr mit 55 bezeichnet. Er unterscheidet sich von dem Adapter 23 nach dem Ausführungsbeispiel gemäß den Fig. 1 bis 6 nur dadurch, daß zwei dieser Adapter 43 zu einer Baueinheit zusammengefügt sind, wobei in der Mitte der Baueinheit liegend noch ein Zwischenstück angeordnet ist. Demzufolge sind bei dem Adapter 55 nunmehr insgesamt acht Säulen 28 vorgesehen, die wiederum in Nähe des Übergangsbereichs der Stege 49 bzw. 50 des Rahmens 51 liegen. Die Baueinheit des Adapters 55 hat jedoch insgesamt nur zwei Halter 34 mit jeweils einem Haltehaken 35. Das Gehäuse des elektrischen Installationsgerätes nach den Fig. 7 und 8 entspricht im wesentlichen demjenigen nach der Fig. 1 der Zeichnungen, nur sind die Seitenwände entsprechend verlängert, und in der Decke 39 sind zwei Einsätze vorhanden.

Im gewählten Ausführungsbeispiel handelt es sich bei dem dargestellten Mehrfachinstallationsgerät 56 um eine Zweifach-Schutzkontaktsteckdose bekannter Bauart. Die beiden Schutzkontaktsteckdosen sind über Verbindungsleitungen 59 miteinander verbunden. Auf der Oberseite des Zwischenstückes 58 ist schematisch eine Anschlußeinrichtung 58 wiedergegeben.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. Dies gilt insbesondere für die Gestalt und Anordnung des Adapters 23 bzw. 55. Insbesondere können dessen Stege 49 bzw. 50 eine andere Ausbildung und Gestalt erhalten. Dies gilt auch für die zugeordneten Schlitze 53 und Ausnehmungen 54. Auch kann die Anzahl der Säulen 28 und ihre Gestalt abweichend von dem gewählten Ausführungsbeispiel durchgeführt werden. Dies gilt auch für das mit dem Adapter 23 bzw. 55 zusammenwirkende Gehäuse 36. Und schließlich kann die Erfindung auch bei anderen, an sich bekannten Kabelkanälen Verwendung finden. In der Fig. 1 der Zeichnungen ist nur ein Teil des deckelartigen Oberteils 29 des Kabelkanals 10 wiedergegeben. Selbstverständlich ist auch der in der Fig. 1 vordere Teil der Öffnung des Unterteils 11 durch einen deckelartigen Oberteil 20 abdeckbar.

### Bezugszeichenliste:

10 - Kabelkanal (Installationskanal)
11 - Unterteil
12 - Schenkel (von 11)
13 - Boden (von 11)
14 - Rast (an 12)
15 - Verlängerung
16 - Trennwand (an 13)
17 - Kammer (in 11)
18 - Kammer (in 11)
19 - Spitze (vorderes Ende von 16)
20 - deckelartiger Oberteil (von 10)
21 - Schenkel (von 20)
22 - Gegenrast (an 21)
23 - Adapter (Verbinder)
24 - gekrümmte Wand (von 23)
25 - Halterast (an 49)
28 - Säule (an 51)
29 - Hohlraum (von 28)
31 - Eingriffsraum (von 28)
32 - obere Öffnung (von 31)
34 - Halter
35 - Haltehaken (von 34)
36 - Gehäuse
37 - Seitenwand (von 36)
38 - Eingriffsschlitz (von 36)
39 - Decke (von 36)
40 - Einsatz
41 - Installationsgerät
42 - Befestigungsschraube
43 - Befestigungsplatte des Installationsgerätes
46 - Vorsprung (an 23)
47 - Einführungsöffnung
48 - Unterbringungsraum
49 - Steg
50 - Steg
51 - Rahmen
52 - Durchbruch (von 51)
53 - Schlitz (in 49)
54 - Ausnehmungen
55 - Adapter - II. Ausführungsform
56 - Mehrfachinstallationsgerät
57 - Zwischenstück (von 55)
58 - Anschlußeinrichtung
59 - Verbindungsleitungen

## Patentansprüche

1. Kabelkanal (10), wie Installationskanal, bestehend aus einem leistenartigen, auf einer Wand anbringbaren, im Querschnitt gesehen etwa C-förmig gestalteten Unterteil (11), dessen Schenkel (12) sich jeweils eine als Rast vorgesehene Deckelaufnahmenut (14) anschließt, wobei die obere Begrenzungswand der Rast (14) in eine schräggestellte Verlängerung (15) in Form eines entlang des Unterteils (11) sich erstreckenden Flansches übergeht und einem damit lösbar verbindbaren, deckelartigen im Querschnitt gesehen etwa C-förmig gestalteten Oberteil (20), dessen Schenkel (21) in eine Gegenrast (22), auslaufen sowie mit Einrichtungen zur Halterung bzw. Lagerung von elektrischen Installationsgeräten, wie Steckdosen, Schaltern, Dimmern od.dgl., wobei auf dem durchlaufenden Unterteil (11) des Kabelkanals (10) an einer frei wählbaren Stelle ein Adapter (23) angebracht ist, der in die Deckelaufnahmenute (14) des Unterteils (11) einrastet, wobei der Adapter (23) dafür an einer gekrümmten Wand (24) eine Halterast (25) aufweist, wobei der Adapter (23) ein elektrisches Installationsgerät (41) aufnimmt, welches mittels Schrauben (42) mit dem Adapter (23) verbunden ist,
**dadurch gekennzeichnet,**
daß der Adapter (23) rahmenartig gestaltet ist, und daß die Stege (49 bzw. 50) dieses Rahmens (51) einen mittleren Durchbruch (52) zum Durchführen von Leitungen, Kabeln od.dgl. umschließen, und daß ein Unterbringungsraum (48) für die Verlängerung (15) zusätzlich durch einen Vorsprung (46) und die Wand (24) begrenzt ist.

2. Kabelkanal nach Anspruch 1, dadurch gekennzeichnet, daß die in Längsrichtung des Kabelkanals (10) verlaufenden Stege (49) des Rahmens (51) an ihren freien Enden die Halterasten (25) aufweisen und zur Verbesserung ihrer Elastizität durch Schlitze (53) in Teilbereiche unterteilt sind.

3. Kabelkanal nach Anspruch 1 und 2, dadurch gekennzeichnet, daß die quer zur Längsrichtung des Kabelkanals (10) verlaufenden Stege (50) des Rahmens (51) schmaler bemessen sind als die Stege (49), und daß sie Ausnehmungen (54) an ihren Seitenkanten aufweisen.

4. Kabelkanal nach einem oder mehreren der Ansprüche 1 bis 3, dadurch gekennzeichnet, daß der Adapter (23) auf seiner dem Unterteil (11) des Kabelkanals (10) abgewandten Seite mehrere Säulen (28) aufweist, die der Festlegung des elektrischen Installationsgerätes (41) dienen, welches in dem von den Säulen (28) begrenzten Raum angeordnet ist, und daß der Adapter (23) insgesamt vier Säulen (28) aufweist, die in Nähe des Übergangsbereiches der Stege (49, 50) des Rahmens (51) angeordnet und als Hohlsäulen ausgebildet sind.

5. Kabelkanal nach Anspruch 4, dadurch gekennzeichnet, daß der Innenraum jeder Säule (28) mehrere wahlweise benutzbare Hohlräume (29) aufweist, die an der Innenwand ein Innengewinde (33) zum Zusammenwirken mit dem Außengewinde der Befestigungsschraube (42) aufweist, deren Schaft in eine der oberen Öffnungen (32) der Hohlräume (29) einführbar ist.

6. Kabelkanal nach einem oder mehreren der Ansprüche 4 bis 6, dadurch gekennzeichnet, daß der Adapter (23) an den diametral gegenüberliegenden Stegen (50) des Rahmens (51) Halter (34) aufweist, deren Haltehaken (35) zur lösbaren Anbringung eines den Adapter (23) und das Installationsgerät (41) abdeckenden Gehäuses (36) dienen.

7. Kabelkanal nach Anspruch 6, dadurch gekennzeichnet, daß das Gehäuse (36) ein einstückiger, haubenförmiger Körper ist, der an zwei diametral gegenüberliegenden Wandungen einen Eingriffschlitz (38) für den Haltehaken (35) des Halters (34) des Adapters (23) hat, und dessen Decke (39) eine Öffnung für einen Teil des Installationsgerätes (41), wie einen Einsatz (40), aufweist.

8. Kabelkanal nach einem oder mehreren der vorangehenden Ansprüche, dessen Unterteil (11) durch Trennwände (16) unterteilt ist, dadurch gekennzeichnet, daß die Spitze (19) wenigstens einer Trennwand (16) des Unterteils 11) des Kabelkanals (10) als Abstützung für die Stege (50) des Adapters (23) benutzbar ist.

9. Kabelkanal nach Anspruch 1, dadurch gekennzeichnet, daß der Adapter (55) derart ausgebildet ist, daß er ein elektrisches Mehrfachinstallationsgerät, wie eine Zweifachsteckdose, aufnehmen kann.

## Claims

1. A cable duct (10), such as an installation duct, comprising a strip-like bottom section (11) which has a roughly C-shaped cross section and can be mounted on a wall, the leg (12) of said bottom section merging into a groove (14), which serves to accommodate a lid and is designed as a catch, the top limiting wall of said catch (14) becoming a slanted extension (15) in the form of a flange stretching along the bottom section (11), and a lid-like top section (20), which is thus detachable and has a roughly C-shaped cross section, the legs (21) of said top section ending in a mating catch (22) as well as facilities to hold and support electrical installation equipment, such as socket outlets, switches, dimmers and the like, whereby on the continuous bottom section (11) of the cable duct (10) an adapter (23) is provided at a freely selectable location, said adapter engaging in the lid-holding groove (14) of the bottom section (11) and exhibiting a holding catch (25) for this purpose on one curved wall (24), whereby the adapter (23) accommodates an electrical installation device (41) which is connected by screws (42) to said adapter (23),
characterised in that
the adapter (23) is designed like a frame, and that the webs (49 and 50) of said frame (51) surround a central opening (52) for passing through lines, cables and the like, and that a space (48) for accommodating the extension (15) is additionally limited by a projection (46) and the wall (24).

2. A cable duct according to claim 1, characterised in that the webs (49) of the frame (51) which run in the longitudinal direction of the cable duct (10) have the holding catches (25) at their free ends and are divided by means of slits (53) into subsections to improve their elasticity.

3. A cable duct according to claims 1 and 2, characterised in that the webs (50) of the frame (51) which run at right angles to the longitudinal direction of the cable duct (10) are of a narrower design than the webs (49) and that they exhibit recesses (54) in their side edges.

4. A cable duct according to one or more of claims 1 to 3, characterised in that the adapter (23) has several columns (28) on its side facing away from the bottom section (11) of the cable duct (10), said columns serving to locate the electrical installation device (41) which is arranged in the space limited by the columns (28), and that the adapter (23) has a total of four columns (28) which are located near the transition section of the webs (49, 50) of the frame (51) and are designed as hollow columns.

5. A cable duct according to claim 4, characterised in that the interior of each column (28) has several cavities (29) which can be optionally used and which have on the inside wall an inside thread (33) to interact with the outside thread of the attachment screw (42), the shank of which can be introduced into one of the top openings (32) of the cavities (29).

6. A cable duct according to one or more of claims 4 to 6, characterised in that the adapter (23) has holders (34) on the diametrically opposite webs (50) of the frame (51), the holding hooks (35) of said holders (34) serving to detachably mount a housing (36) which covers the adapter (23) and the installation device (41).

7. A cable duct according to claim 6, characterised in that the housing (36) is a single-part, hood-shaped body which, on two diametrically opposite walls, has an engaging slit (38) for the holding hook (35) of the holder (34) of the adapter (23) and the top (39) of said housing has an opening for a part of the installation device (41), such as an insert (40).

8. A cable duct according to one or more of the above claims, the bottom section (11) of which is subdivided by partition walls (16), characterised in that the tip (19) of at least one partition wall (16) of the bottom section (11) of the cable duct (10) can be used to support the webs (50) of the adapter (23).

9. A cable duct according to claim 1, characterised in that the adapter (55) is designed in such a way that it can accommodate an electric multiple installation device, such as a double socket outlet.

## Revendications

1. Canalisation à câbles (10), comme canal d'installation, comprenant une partie inférieure (11) en forme de listeau fixable contre un mur et dont la section a approximativement la forme d'un "C", dont (10) la branche (12) est prolongée par une rainure (14) prévue en forme de cran pour recevoir le couvercle, la paroi limitatrice supérieure du cran (14) devenant une prolongation (15) inclinée sous forme de bride s'étendant le long de la partie inférieure (11), et comprenant une partie supérieure (20) reliable de manière amovible, dont la section a approximativement la forme d'un "C" et dont les branches (21) se terminent par un cran antagoniste (22), et comprenant également des dispositifs servant à la fixation et au rangement d'appareils d'installation électrique tels que des prises, commutateurs, tamiseurs de lumière ou assimilés, un adaptateur (23) étant monté à un endroit librement choisissable de la partie inféreure continue (11) de la canalisation à câbles (10), lequel (23) encrante dans la rainure (14) logeant le couvercle qui (14) équipe la partie inférieure (11), lequel (23) présente à cet effet contre une paroi coudée (24) un cran de retenue (25), cet adaptateur (23) logeant un appareil d'installation électrique (41) relié par des vis (42) à l'adaptateur (23),
**caractérisée en ce que**
l'adaptateur (23) a la forme d'un cadre et que les nervures (49 et 50) de ce cadre (51) délimitent un passage médian (52) dans lequel passer des lignes, câbles ou assimilés, et en ce qu'un compartiment de logement (48) de la rallonge (15) est en outre limité par une saillie (46) et la paroi (24).

2. Canalisation à câbles selon revendication 1, caractérisée en ce que les nervures (49) du cadre (51) disposées longitudinalement dans la canalisation à câbles (10) présentent les crans de retenue (25) en leurs (49) extrémités libres et que pour améliorer leur élasticité elles (49) sont subdivisées en segments par des fentes (53).

3. Canalisation à câbles selon revendication 1 et 2, caractérisée en ce que les nervures (50) du cadre (51) disposées transversalement au sens longitudinal de la canalisation à câbles (10) ont été dimensionnées plus étroites que les nervures (49) et qu'elles (50) présentent des évidements (54) contre leurs bords latéraux.

4. Canalisation à câbles selon l'une ou plusieurs des revendications 1 à 3, caractérisée en ce que l'adaptateur (23) présente plusieurs colonnes (28) sur son côté opposé à la partie inférieure (11) de la canalisation à câbles (10), lesquelles (28) servent à fixer l'appareil d'installation électrique (41) disposé dans l'espace délimité par les colonnes (28), et en ce que l'adaptateur (23) présente au total quatre colonnes (28) disposées à proximité de la zone de transition des nervures (49, 50) du cadre (51) et qui (28) sont en forme de colonnes creuses.

5. Canalisation à câbles selon la revendication 4, caractérisée en ce que le volume intérieur de chaque colonne (28) présente plusieurs cavités (29) utilisables au choix et qui comportent un taraudage (33) ménagé contre leur paroi intérieure et destiné à interagir avec le filetage de la vis de fixation (42) dont la tige est introductible dans l'un des orifices supérieurs (32) des cavités (29).

6. Canalisation à câbles selon l'une ou plusieurs des revendications 4 à 6, caractérisée en ce que l'adaptateur (23) présente des supports (34) situés sur les nervures (50) diamétralement opposées du cadre (51) dont (34) les crochets de retenue (35) servent à fixer de manière amovible un boîtier (36) recouvrant l'adaptateur (23) et l'appareil d'installation (41).

7. Canalisation à câbles selon la revendication 6, caractérisée en ce que le boîtier (36) est un corps monobloc en forme de capot présentant sur deux parois diamétralement opposées une fente d'engrènement (38) dans laquelle pénètre le crochet (35) de retenue du support (34) de l'adaptateur (23), et dont le sommet (39) présente deux ouvertures laissant le passage à une partie de l'appareil d'installation électrique (41), tel qu'un insert (40).

8. Canalisation à câbles selon l'une ou plusieurs des revendications précédentes, dont la partie inférieure (11) est subdivisée par des cloisons séparatrices (16), caractérisée en ce que la pointe (19) d'au moins une cloison séparatrice (16) de la partie inférieure (11) de la canalisation à câbles (10) est utilisable comme appui pour les rainures (50) de l'adaptateur (23).

9. Canalisation à câbles selon revendication 1, caractérisée en ce que la géométrie de l'adaptateur (55) est telle qu'il puisse recevoir un appareil multiple d'installation électrique, tel que des prises jumelles.
